(19) Europäisches Patentamt / European Patent Office / Office européen des brevets

(11) **EP 2 178 952 B1**

(12) **EUROPEAN PATENT SPECIFICATION**

(45) Date of publication and mention of the grant of the patent:
**16.03.2016 Bulletin 2016/11**

(51) Int Cl.:
***C08J 5/18*** *(2006.01)*

(21) Application number: **08792883.4**

(22) Date of filing: **24.07.2008**

(86) International application number:
**PCT/KR2008/004334**

(87) International publication number:
**WO 2009/017330 (05.02.2009 Gazette 2009/06)**

(54) **POLYIMIDE FILM WITH IMPROVED THERMAL STABILITY**

POLYIMIDFILM MIT VERBESSERTER THERMISCHER STABILITÄT

FILM POLYIMIDE PRÉSENTANT UNE STABILITÉ THERMIQUE ACCRUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.07.2007 KR 20070077144**
**15.07.2008 KR 20080068416**

(43) Date of publication of application:
**28.04.2010 Bulletin 2010/17**

(73) Proprietor: **Kolon Industries, Inc.**
**Gyeonggi-do 427-800 (KR)**

(72) Inventors:
• **PARK, Hyo Jun**
**Yongin-si**
**Gyeonggi-do 448-160 (KR)**
• **JUNG, Hak Gee**
**Yongin-si**
**Gyeonggi-do 448-172 (KR)**
• **SONG, Sang Min**
**Yongin-si**
**Gyeonggi-do 446-771 (KR)**
• **KANG, Chung Seock**
**Yongin-si**
**Gyeonggi-do 448-120 (KR)**

(74) Representative: **Ter Meer Steinmeister & Partner**
**Patentanwälte mbB**
**Nymphenburger Straße 4**
**80335 München (DE)**

(56) References cited:
EP-A1- 1 749 850          WO-A1-2007/066948
WO-A1-2007/083909          KR-A- 20020 040 853
KR-A- 20070 058 812          KR-A- 20070 076 771
KR-A- 20080 055 531          US-A- 5 649 045
US-A1- 2005 238 896          US-A1- 2005 238 896

**Description**

**[Technical Field]**

The present invention relates to a polyimide film having improved thermal stability.

[Background Art]

Generally, a polyimide (PI) resin refers to a highly heat-resistant resin obtained by subjecting aromatic dianhydride and aromatic diamine or aromatic diisocyanate to solution polymerization to prepare a polyamic acid derivative, which is then subjected to ring closure and dehydration at high temperatures to imidize it. For the preparation of the polyimide resin, examples of the aromatic dianhydride include pyromellitic dianhydride (PMDA) and biphenyltetracarboxylic dianhydride (BPDA), and examples of the aromatic diamine include oxydianiline (ODA), p-phenylene diamine (p-PDA), m-phenylene diamine (m-PDA), methylene dianiline (MDA), and bisaminophenyl hexafluoropropane (HFDA).

A polyimide resin, which is insoluble, infusible and resistant to very high heat, has superior properties, including thermal oxidation resistance, heat resistance, radiation resistance, low temperature resistance, and chemical resistance, and is thus used in various fields, including advanced heat-resistant materials, such as automobile materials, aircraft materials, and spacecraft materials, and electronic materials, such as insulation coating agents, insulating films, semiconductors, and electrode protective films of TFT-LCDs. Recently, a polyimide resin has been used for display materials, such as optical fibers or liquid crystal alignment layers, and transparent electrode films, in which a conductive filler is contained in the film or is applied on the surface of the film.

However, in the case where a polyimide film, which is prepared from the polyimide resin, is subjected to temperature variation at high temperatures, the film expands or contracts due to the properties thereof, resulting in hysteresis. As such, the degree of such change is not always uniform. Hence, in order to estimate the degree of change, several temperature variations must be carried out, but this procedure is cumbersome. Further, such a polyimide film is difficult to use in fields in which thermal dimensional stability is required.

US 2015/0238896 discloses a polyimide film produced by casting a first polyamic acid solution onto a substrate, the first polyamic acid solution being prepared using a first acid dianhydride component containing at least pyromellitic dianhydride and a first diamine component containing at least p-phenylene diamine and 4,4'-diaminodiphenyl ether.

WO 2007/083909 is directed to a polyimide film produced by imidizing polyamic acid, the polyamic acid being prepared by reacting diamines with dianhydrides, wherein the polyimide film has an elongation from 50 to 150 %, a tensile elastic modulus from 4 to 8 GPa, a tensile strength from 150 to 500 MPa and a hygroscopicity of 5 % or less.

WO 2007/066948 discloses a polyimide film comprising a polyamic acid prepared by reacting an acid anhydride with a diamine compound wherein the acid anhydride comprises a mixture of 4,4'-oxidiphthalic anhydride and at least one acid anhydride selected from pyromellitic dianhydride and other aromatic tetracarboxylic dianhydrides.

EP 1 749 850 is directed to a film comprising polyimide, the polyimide comprising a perfluoro-imide moiety obtained by contacting a first dianhydride component and a first diamine component.

US 5,649,045 is directed to polyimide optical waveguide structures comprising a core within a cladding wherein at least one of the core and the cladding is a polyimide containing 6 FDA.

**[Disclosure]**

**[Technical Problem]**

Accordingly, the present invention provides a polyimide film having superior thermal stability.

In addition, the present invention provides a substrate for a display, which exhibits superior thermal stability.

**[Technical Solution]**

According to an aspect of the present invention, a polyimide film is provided, wherein when 2n+1 (in which n is an integer from 1 to 3) measurements of a coefficient of thermal expansion (CTE) of the polyimide film are conducted at 50~200°C using a TMA method, D (%), calculated from Equation 1 below, is -20 ≤ D ≤ 0, and I (%), calculated from Equation 2 below, is 0 ≤ I ≤ 20,

wherein the polyimide film is obtained by polymerizing diamine and dianhydride, thus preparing a polyamic acid solution, subjecting the polyamic acid solution to a film forming process, thus obtaining a polyimide film, and then thermally treating the polyimide film at 100~500°C for a period of time ranging from 1 min to 3 hours;

the dianhydride component comprising one or a mixture of two or more selected from the group consisting of 2,2-bis(3,4-dicarboxyphenyl)hexafluoropropane dianhydride (6FDA), 4-(2,5-dioxotetrahydrofuran-3-yl)-1,2,3,4-tetrahydronaphthalene-1,2-dicarboxylic dianhydride (TDA), pyromellitic dianhydride (PMDA, 1,2,4,5-benzene tetracarboxylic dianhydride), benzophenone tetracarboxylic dianhydride (BTDA), biphenyl tetracarboxylic dianhydride (BPDA), oxydiphthalic dianhydride (ODPA), bis-carboxyphenyl dimethylsilane dianhydride (SiDA), bis-dicarboxyphenoxy diphenylsulfide dianhydride (BDSDA), sulfonyl diphthalic anhydride ($SO_2$DPA), cyclobutane tetracarboxylic dianhydride (CBDA), and isopropylidene diphenoxy bis-phthalic anhydride (6HBDA);

the diamine component comprising one or a mixture of two or more selected from the group consisting of oxydianiline (ODA), p-phenylene diamine (pPDA), m-phenylene diamine (mPDA), p-methylene diamine (pMDA), m-methylene diamine (mMDA), bis-aminophenoxy benzene (133APB, 134APB), bis-aminophenoxy phenyl hexafluoropropane (4BDAF), bis-aminophenyl hexafluoropropane (33-6F, 44-6F), bis-aminophenyl sulfone (4DDS, 3DDS), bis-trifluoromethyl benzidine (TFDB), cyclohexane diamine (13CHD, 14CHD), bis-aminophenoxy phenyl propane (6HMDA), bis-aminohydroxy phenyl hexafluoropropane (DBOH), and bis-aminophenoxy diphenyl sulfone (DBSDA):

```
Equation 1

D = (minimum CTE - average CTE) / average CTE × 100


Equation 2

I = (maximum CTE - average CTE) / average CTE × 100.
```

In one embodiment, in the polyimide film of the present invention, D (%) calculated from Equation 1 may be $-15 \leq D \leq 0$, and I (%) calculated from Equation 2 may be $0 \leq I \leq 15$.

In the polyimide film according to one embodiment of the present invention, a CTE at 50~200°C may be 50 ppm/°C or less.

In addition, according to another aspect of the present invention, a substrate for a display, comprising the above polyimide film, is provided.

[Advantageous Effects]

According to the present invention, a polyimide film having superior thermal stability can be provided.

Further, a substrate for a display exhibiting superior thermal stability can be provided.

**[Mode for Invention]**

Hereinafter, a detailed description will be given of the present invention.

Based on the present invention, a polyimide film is obtained by polymerizing diamine and dianhydride, thus preparing a polyamic acid solution, subjecting the polyamic acid solution to a film forming process, thus obtaining a polyimide film, and then thermally treating the polyimide film at 100~500°C for a period of time ranging from 1 min to 3 hours. In order to apply the polyimide film in fields in which thermal dimensional stability is required, when 2n+1 (in which n is an integer from 1 to 3) measurements of the CTE of the polyimide film are conducted at 50~200°C through a TMA method and the average value is determined, D (%), calculated from Equation 1 below, should be in the range of $-20 \leq D \leq 0$, and I (%), calculated from Equation 2 below, should be in the range of $0 \leq I \leq 20$. Preferably, D (%), calculated from Equation 1 below, is $-15 \leq D \leq 0$, and I (%), calculated from Equation 2 below, is $0 \leq I \leq 15$.

```
Equation 1

D = (minimum CTE - average CTE) / average CTE × 100


Equation 2

I = (maximum CTE - average CTE) / average CTE × 100
```

In the present invention, the range from D (%), calculated from Equation 1, to I (%), calculated from Equation 2, that is, the D~I range, is defined as a CTE hysteresis range.

In the case where the CTE hysteresis range exceeds ±20%, that is, in the case where D is less than -20% or I exceeds 20%, the dimensional change of a polyimide substrate is greatly increased depending on the temperature of a subsequent TFT array process, and the degree of such change varies continuously. Accordingly, in the corresponding process, it is difficult to estimate the dimensional change of the polyimide substrate in order to align it.

The dianhydride component used in the present invention comprises one or a mixture of two or more selected from the group consisting of 2,2-bis(3,4-dicarboxyphenyl)hexafluoropropane dianhydride (6FDA), 4-(2,5-dioxotetrahydrofuran-3-yl)-1,2,3,4-tetrahydronaphthalene-1,2-dicarboxylic dianhydride (TDA), pyromellitic dianhydride (PMDA, 1,2,4,5-benzene tetracarboxylic dianhydride), benzophenone tetracarboxylic dianhydride (BTDA), biphenyl tetracarboxylic dianhydride (BPDA), oxydiphthalic dianhydride (ODPA), bis-carboxyphenyl dimethylsilane dianhydride (SiDA), bis-dicarboxyphenoxy diphenylsulfide dianhydride (BDSDA), sulfonyl diphthalic anhydride (SO$_2$DPA), cyclobutane tetracarboxylic dianhydride (CBDA), and isopropylidene diphenoxy bis-phthalic anhydride (6HBDA).

The diamine component used in the present invention comprises one or a mixture of two or more selected from the group consisting of oxydianiline (ODA), p-phenylene diamine (pPDA), m-phenylene diamine (mPDA), p-methylene diamine (pMDA), m-methylene diamine (mMDA), bis-aminophenoxy benzene (133APB, 134APB), bis-aminophenoxy phenyl hexafluoropropane (4BDAF), bis-aminophenyl hexafluoropropane (33-6F, 44-6F), bis-aminophenyl sulfone (4DDS, 3DDS), bis-trifluoromethyl benzidine (TFDB), cyclohexane diamine (13CHD, 14CHD), bis-aminophenoxy phenyl propane (6HMDA), bis-aminohydroxy phenyl hexafluoropropane (DBOH), and bis-aminophenoxy diphenyl sulfone (DBSDA).

The dianhydride component and the diamine component are dissolved in equimolar proportions in a first solvent and are then allowed to react, thus preparing a polyamic acid solution.

Although the reaction conditions are not particularly limited, the reaction temperature is preferably set to -20~80°C and the reaction time is preferably set to 2~48 hours. Further, the reaction is preferably conducted in an inert atmosphere of argon or nitrogen.

The first solvent for the solution polymerization of the monomers is not particularly limited, as long as polyamic acid can be dissolved therein. As the known reaction solvent, useful are one or more polar solvents selected from among m-cresol, N-methyl-2-pyrrolidone (NMP), dimethylformamide (DMF), dimethylacetamide (DMAc), dimethylsulfoxide (DMSO), acetone, and diethylacetate. In addition, a low-boiling-point solvent, such as tetrahydrofuran (THF) or chloroform, or a low-absorbing-solvent, such as γ-butyrolactone, may be used.

The amount of the first solvent is not particularly limited, but is set to 50~95 wt%, and preferably 70~90 wt%, based on the total amount of the polyamic acid solution, in order to prepare a polyamic acid solution having adequate molecular weight and viscosity.

The polyamic acid solution thus obtained is imidized, thus preparing a polyimide resin, which preferably has a glass transition temperature of 200~400°C in consideration of thermal stability.

Further, when a polyimide film is prepared from the polyamic acid solution, a filler may be added to the polyamic acid solution so as to improve various properties of the polyimide film, including sliding properties, thermal conductivity, electrical conductivity, and corona resistance. The type of filler is not particularly limited, but specific examples thereof include silica, titanium oxide, layered silica, carbon nanotubes, alumina, silicon nitride, boron nitride, calcium hydrogen phosphate, calcium phosphate, and mica.

The particle size of the filler may vary depending on the properties of the film to be modified and the type of filler to be added, but is not particularly limited. The average particle size thereof is preferably set within the range of 0.001~50 μm, more preferably 0.005~25 μm, and still more preferably 0.01~10 μm. In this case, modification effects on the polyimide film are easy to realize, and also the polyimide film may exhibit good surface properties, electrical conductivity, and mechanical properties.

The amount of filler that is added may vary depending on the properties of the film to be modified and the particle size of the filler, but is not particularly limited. The filler is added in an amount of 0.001~20 parts by weight, and preferably 0.01~10 parts by weight, based on 100 parts by weight of the polyamic acid solution, in order to realize the properties to be modified without negatively affecting the bond structure of the polymer resin.

The method of adding the filler is not particularly limited, but includes, for instance, adding the filler to the polyamic acid solution before or after polymerization, kneading the filler using a 3 roll mill after completion of the polymerization of polyamic acid, or mixing a dispersion solution containing the filler with the polyamic acid solution.

The method of preparing the polyimide film from the polyamic acid solution includes any conventionally known method. That is, the polyimide film may be prepared by casting the polyamic acid solution on a support and then performing imidization.

As such, the imidization method includes, for example, thermal imidization, chemical imidization, or a combination of thermal imidization and chemical imidization. Chemical imidization includes the addition of the polyamic acid solution with a dehydrating agent, including acid anhydride, such as acetic anhydride, and an imidization catalyst, including tertiary amine, such as isoquinoline, β-picoline, or pyridine. In the case where thermal imidization or a combination of thermal imidization and chemical imidization is used, conditions for heating the polyamic acid solution may vary depending on the type of polyamic acid solution and the thickness of the resulting polyimide film.

When more specifically describing the preparation of the polyimide film using a combination of thermal imidization and chemical imidization, the polyamic acid solution is added with a dehydrating agent and an imidization catalyst, cast on a support, and then heated at 80~200°C and preferably 100~180°C to activate the dehydrating agent and the imidization catalyst, thereby obtaining a partially cured or dried polyamic acid film in a gel state, which is then peeled from the support. Thereafter, this gel film is held on a frame and is then heated to 200~400°C for 5~400 sec, resulting in a polyimide film. The gel film may be held on the frame with pins or clips. Examples of the support include a glass plate, aluminum foil, an endless stainless-steel belt, a stainless-steel drum, etc.

In addition, in the present invention, the polyimide film may be prepared from the polyamic acid solution, as described below. Specifically, the obtained polyamic acid solution is imidized, after which the imidized solution is added to a second solvent, filtered, and then dried, thus obtaining a solid polyimide resin. Subsequently, the solid polyimide resin is dissolved in the first solvent, thus obtaining a polyimide solution, which is then subjected to a film forming process, resulting in a polyimide film.

When the polyamic acid solution is imidized, thermal imidization, chemical imidization, or a combination of thermal imidization and chemical imidization may be applied as above. In the case of using a combination of thermal imidization and chemical imidization, the imidization may be specifically executed by subjecting the polyamic acid solution to addition with a dehydrating agent and an imidization catalyst, and then to heating at 20~180°C for 1~12 hours.

The first solvent may be the same as the solvent used for the polymerization of the polyamic acid solution. The second solvent should have polarity lower than that of the first solvent in order to obtain the solid polyimide resin, and specifically, one or more selected from among water, alcohols, ethers, and ketones may be used.

The amount of the second solvent is not particularly limited, and is preferably 5~20 times the weight of the polyamic acid solution.

The conditions for drying the filtered solid polyimide resin include a temperature of 50~120°C and a period of time of 3~24 hours, in consideration of the boiling point of the second solvent.

In the film forming process, the polyimide solution, in which the solid polyimide resin is dissolved, is cast on the support, and is then heated for a period of time ranging from 1 min to 8 hours while the temperature is gradually increased in the range of 40~400°C, yielding the polyimide film.

In the present invention, the polyimide film thus obtained may be subjected to thermal treatment once more. Additional thermal treatment may be performed at 100~500°C for 1-30 min.

The volatile component of the thermally treated film remains in an amount of 5% or less, and preferably 3% or less.

In an embodiment of the present invention, in order to narrow the CTE hysteresis range of the polyimide film, the prepared polyimide film is thermally treated again under a predetermined tension. In the case where a residual stress, which is a force of contracting the film, generated in a film forming process, is present in the film, the thermal expansion of the film is reduced, leading to a low CTE. Hence, the prepared film is subjected to thermal treatment once more, and thereby, the CTE hysteresis range due to residual stress is narrowed. As such, because the tension and temperature conditions are correlated, the tension condition may vary depending on the temperature. For instance, when the film is prepared, the temperature is maintained in the range of 100~500°C, and the tension is variable within a predetermined range within which the film can be held. Thermal treatment is conducted for a period of time ranging from 1 min to 3 hours. Further, for the above thermal treatment, a typical process used for the thermal treatment of the polyimide film may be applied.

The thickness of the resultant polyimide film is not particularly limited, but is preferably set within the range of 10~250 μm, and more preferably 25~150 μm.

The polyimide film according to the present invention preferably has a CTE of 50 ppm/°C or less at 50~200°C. In the case where the polyimide film is used in a TFT array process, in which a TFT is placed on the film, when the CTE thereof exceeds 50 ppm/°C, the degree of expansion/contraction of the film is increased depending on variation in the process temperature, and thus, in an electrode doping process, alignment is not achieved or the film is not maintained flat, undesirably causing flexure of the film. Hence, as the CTE is lower, the TFT process may be more precisely conducted.

In addition, the polyimide film of the present invention is applied to a substrate for a display, such as a flexible display, thereby realizing a display substrate having superior thermal stability.

A better understanding of the present invention may be obtained through the following examples, which are set forth to illustrate, but are not to be construed as the limit of the present invention.

<Example 1>

While nitrogen was passed through a 1 ℓ reactor, which was equipped with a stirrer, a nitrogen inlet, a dropping funnel, a temperature controller and a condenser, 599 g of N,N-dimethylacetamide (DMAc) was placed in the reactor, the temperature of the reactor was adjusted to 25°C, 64.046 g (0.2 mol) of TFDB was dissolved therein, and then this solution was maintained at 25°C. Further, 5.8544 g (0.02 mol) of BPDA was added thereto and the reaction solution was stirred for 1 hour, thus completely dissolving the BPDA. During this time, the temperature of the solution was maintained at 25°C. Furthermore, 79.96 g (0.18 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 $\ell$ of methanol, after which the precipitated solid was filtered, milled, and then dried in a vacuum at 80°C for 6 hours, thus yielding 126 g of solid powder, which was then dissolved in 504 g of N,N-dimethylacetamide (DMAc), resulting in a 20 wt% solution (viscosity: 70 poise).

The solution obtained after the completion of the reaction was cast to a thickness of 700 $\mu$m on a stainless-steel plate, and was then dried with hot air at 100~500°C for 1 hour, after which the resultant film was peeled from the stainless-steel plate, and was then attached to and held on to a frame with pins.

The frame on which the film was held was placed in a vacuum oven, slowly heated from 100°C to 300°C for 2 hours, and then slowly cooled, after which the resulting polyimide film was removed from the frame. The polyimide film thus obtained was subjected to final thermal treatment at 300°C for 30 min (thickness: 100 $\mu$m).

<Example 2>

As in Example 1, 587.5 g of N,N-dimethylacetamide (DMAc) was placed in the reactor, the temperature of the reactor was adjusted to 25°C, 64.046 g (0.2 mol) of TFDB was dissolved therein, and then this solution was maintained at 25°C. Further, 11.768 g (0.04 mol) of BPDA was added thereto and the reaction solution was stirred for 1 hour, thus completely dissolving the BPDA. As such, the temperature of the solution was maintained at 25°C. Furthermore, 71.08 g (0.16 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 $\ell$ of methanol, after which the precipitated solid was filtered, milled, and then dried in a vacuum at 80°C for 6 hours, thus yielding 124.1 g of powder, which was then dissolved in 496 g of N,N-dimethylacetamide (DMAc), resulting in a 20 wt% solution (viscosity: 82 poise).

Thereafter, the same subsequent process as in Example 1 was conducted, thereby preparing a polyimide film.

<Example 3>

As in Example 1, 575 g of N,N-dimethylacetamide (DMAc) was placed in the reactor, the temperature of the reactor was adjusted to 25°C, 64.046 g (0.2 mol) of TFDB was dissolved therein, and then this solution was maintained at 25°C. Further, 17.65 g (0.06 mol) of BPDA was added thereto and the reaction solution was stirred for 1 hour, thus completely dissolving the BPDA. During this time, the temperature of the solution was maintained at 25°C. Furthermore, 62.19 g (0.14 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 $\ell$ of methanol, after which the precipitated solid was filtered, milled, and then dried in a vacuum at 80°C for 6 hours, thus yielding 119 g of powder, which was then dissolved in 476 g of N,N-dimethylacetamide (DMAc), resulting in a 20 wt% solution (viscosity: 95 poise).

Thereafter, the same subsequent process as in Example 1 was conducted, thereby preparing a polyimide film.

<Example 4>

As in Example 1, 563 g of N,N-dimethylacetamide (DMAc) was placed in the reactor, the temperature of the reactor was adjusted to 25°C, 64.046 g (0.2 mol) of TFDB was dissolved therein, and then this solution was maintained at 25°C. Further, 23.53 g (0.08mol) of BPDA was added thereto and the reaction solution was stirred for 1 hour, thus completely dissolving the BPDA. During this time, the temperature of the solution was maintained at 25°C. Furthermore, 53.31 g (0.12 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 $\ell$ of methanol, after which the precipitated solid was filtered, milled, and then dried in a vacuum at 80°C for 6 hours, thus yielding 116.2 g of powder, which was then dissolved in 464.8 g of N,N-dimethylacetamide (DMAc), resulting tin a 20 wt% solution (viscosity: 104 poise).

Thereafter, the same subsequent process as in Example 1 was conducted, thereby preparing a polyimide film.

<Example 5>

As in Example 1, 551.5 g of N,N-dimethylacetamide (DMAc) was placed in the reactor, the temperature of the reactor was adjusted to 25°C, 64.046 g (0.2 mol) of TFDB was dissolved therein, and then this solution was maintained at 25°C. Further, 29.422 g (0.1 mol) of BPDA was added thereto and the reaction solution was stirred for 1 hour, thus completely dissolving the BPDA. During this time, the temperature of the solution was maintained at 25°C. Furthermore, 44.425 g (0.1 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 ℓ of methanol, after which the precipitated solid was filtered, milled, and then dried in a vacuum at 80°C for 6 hours, thus yielding 110 g of powder, which was then dissolved in 440 g of N,N-dimethylacetamide (DMAc), resulting in a 20 wt% solution (viscosity: 132 poise).

Thereafter, the same subsequent process as in Example 1 was conducted, thereby preparing obtaining a polyimide film.

<Example 6>

As in Example 1, 593.4 g of N,N-dimethylacetamide (DMAc) was placed in the reactor, the temperature of the reactor was adjusted to 25°C, 64.046 g (0.2 mol) of TFDB was dissolved therein, and then this solution was maintained at 25°C. Further, 4.36 g (0.02 mol) of PMDA was added thereto and the reaction solution was stirred for 1 hour, thus completely dissolving the PMDA. During this time, the temperature of the solution was maintained at 25°C. Furthermore, 79.96 g (0.18 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 ℓ of methanol, after which the precipitated solid was filtered, milled, and then dried in a vacuum at 80°C for 6 hours, thus yielding 131 g of powder, which was then dissolved in 524 g of N,N-dimethylacetamide (DMAc), resulting in a 20 wt% solution (viscosity: 73 poise).

Thereafter, the same subsequent process as in Example 1 was conducted, thereby preparing a polyimide film.

<Example 7>

As in Example 1, 575 g of N,N-dimethylacetamide (DMAc) was placed in the reactor, the temperature of the reactor was adjusted to 25°C, 64.046 g (0.2 mol) of TFDB was dissolved therein, and then this solution was maintained at 25°C. Further, 8.72 g (0.04 mol) of PMDA was added thereto and the reaction solution was stirred for 1 hour, thus completely dissolving the PMDA. During this time, the temperature of the solution was maintained at 25°C. Furthermore, 71.08 g (0.16 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 ℓ of methanol, after which the precipitated solid was filtered, milled, and then dried in a vacuum at 80°C for 6 hours, thus yielding 124 g of powder, which was then dissolved in 496 g of N,N-dimethylacetamide (DMAc), resulting in a 20 wt% solution (viscosity: 86 poise).

Thereafter, the same subsequent process as in Example 1 was conducted, thereby preparing a polyimide film.

<Example 8>

As in Example 1, 556.9 g of N,N-dimethylacetamide (DMAc) was placed in the reactor, the temperature of the reactor was adjusted to 25°C, 64.046 g (0.2 mol) of TFDB was dissolved therein, and then this solution was maintained at 25°C. Further, 13.08 g (0.06 mol) of PMDA was added thereto and the reaction solution was stirred for 1 hour, thus completely dissolving the PMDA. During this time, the temperature of the solution was maintained at 25°C. Furthermore, 62.19 g (0.14 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 ℓ of methanol, after which the precipitated solid was filtered, milled, and then dried in a vacuum at 80°C for 6 hours, thus yielding 117 g of powder, which was then dissolved in 468 g of N,N-dimethylacetamide (DMAc), resulting in a 20 wt% solution (viscosity: 90 poise).

Thereafter, the same subsequent process as in Example 1 was conducted, thereby preparing a polyimide film.

<Example 9>

As in Example 1, 609.54 g of N,N-dimethylformamide (DMF) was placed in the reactor. The temperature of the reactor was adjusted to 25°C, 9.46 g of p-phenylenediamine, which is a type of diamine, was added and dissolved therein, and then 76.34 g of PMDA was added thereto. The solution thus obtained was maintained at 25°C, stirred for about 30 min, and then added with 52.56 g of 4,4'-diaminodiphenyl ether (ODA). Thereafter, the reaction solution was stirred for 2 hours while the above temperature was maintained.

After the stirring process, the temperature of the reactor was increased to 40°C, and then stirring was conducted for 1 hour while this temperature was maintained. The polyamic acid solution obtained after the completion of the reaction had a solid content of 18.5 wt% and a viscosity of 2300 poise. The molar ratio of monomers added was 100% PMDA, 75% ODA, and 25% p-PDA.

100 g of the polyamic acid solution and 50 g of a catalyst solution (7.2 g of isoquinoline and 22.4 g of acetic anhydride) were mixed, uniformly stirred, cast to a thickness of 100 $\mu$m on a stainless-steel plate, and then dried with hot air at 150°C for 5 min, after which the resulting film was peeled from the stainless-steel plate, and was then attached to and held on a frame with pins.

The frame on which the film was held was placed in a convection oven, slowly heated from 100°C to 350°C for 30 min, and then slowly cooled, after which the resulting polyimide film was removed from the frame. The polyimide film thus obtained was subjected to final thermal treatment at 350°C for 30 min (thickness: 25 $\mu$m).

<Example 10>

As in Example 1, 609.54 g of N,N-dimethylformamide (DMF) was placed in the reactor. The temperature of the reactor was adjusted to 25°C, 70.084 g of 4,4'-diaminodiphenyl ether (ODA), which is a type of diamine, was added and dissolved therein, and then 76.34 g of PMDA was added thereto. The solution thus obtained was stirred for 2'hours while the temperature thereof was maintained at 25°C.

After the stirring process, the temperature of the reactor was increased to 40°C, and then stirring was conducted for 1 hour while this temperature was maintained. The polyamic acid solution obtained after the completion of the reaction had a solid content of 18.5 wt% and a viscosity of 2570 poise. The molar ratio of monomers added was 100% PMDA and 100% ODA.

100 g of the polyamic acid solution and 50 g of a catalyst solution (7.2 g of isoquinoline and 22.4 g of acetic anhydride) were mixed, uniformly stirred, cast to a thickness of 100 $\mu$m on a stainless-steel plate, and then dried with hot air at 150°C for 5 min, after which the resulting film was peeled from the stainless-steel plate, and was then attached to and held on a frame with pins.

The frame on which the film was held was placed in a convection oven, slowly heated from 100°C to 350°C for 30 min, and then slowly cooled, after which the resulting polyimide film was removed from the frame. The polyimide film thus obtained was subjected to final thermal treatment at 350°C for 30 min (thickness: 25 $\mu$m).

<Example 11>

As in Example 1, 611 g of N,N-dimethylacetamide (DMAc) was placed in the reactor. The temperature of the reactor was adjusted to 25°C, 64.046 g (0.2 mol) of TFDB was dissolved therein, and then this solution was maintained at 25°C. Further, 88.85 g (0.2 mol) of 6FDA was added thereto, thus obtaining a polyamic acid solution having a solid content of 20 wt%.

Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 ℓ of methanol, after which the precipitated solid was filtered, milled, and then dried in a vacuum at 80°C for 6 hours, thus yielding 136 g of powder, which was then dissolved in 496 g of N,N-dimethylacetamide (DMAc), resulting in a 20 wt% solution (viscosity: 71 poise).

Thereafter, the same subsequent process as in Example 1 was conducted, thereby preparing a polyimide film.

<Example 12>

As in Example 1, 604.88 g of N,N-dimethylacetamide (DMAc) was placed in the reactor. The temperature of the reactor was adjusted to 25°C, 44.83 g (0.14 mol) of TFDB was dissolved therein, and then this solution was maintained at 25°C. Further, 88.85 g (0.2 mol) of 6FDA was added thereto, and the reaction solution was stirred for 1 hour, thus completely dissolving the 6FDA. During this time, the temperature of the solution was maintained at 25°C. Furthermore, 17.54 g (0.06 mol) of 133APB was added thereto, thus obtaining a polyamic acid solution having a solid content of 20 wt%.
Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 ℓ of methanol, after which the precipitated solid was filtered, milled, and then dried in a vacuum at 80°C for 6 hours, thus yielding 134.6 g of powder, which was then dissolved in 536 g of N,N-dimethylacetamide (DMAc), resulting in a 20 wt% solution (viscosity: 62 poise).
Thereafter, the same subsequent process as in Example 1 was conducted, thereby preparing a polyimide film.

<Example 13>

As in Example 1, 665.4 g of N,N-dimethylacetamide (DMAc) was placed in the reactor. The temperature of the reactor was adjusted to 25°C, 64.046 g (0.2 mol) of TFDB was dissolved therein, and then this solution was maintained at 25°C. Further, 71.08 g (0.14 mol) of 6FDA was added thereto, and the reaction solution was stirred for 1 hour, thus completely dissolving the 6FDA. During this time, the temperature of the solution was maintained at 25°C. Furthermore, 31.23 g (0.06 mol) of 6HBDA was added thereto, thus obtaining a polyamic acid solution having a solid content of 20 wt%.
Thereafter, the polyamic acid solution was stirred at room temperature for 8 hours, added with 31.64 g of pyridine and 40.91 g of acetic anhydride, stirred for 30 min, further stirred at 80°C for an additional 2 hours, and then cooled to room temperature. The solution thus obtained was slowly added to a vessel containing 20 ℓ of methanol, after which the precipitated solid was filtered, milled, and then dried in a vacuum at 80°C for 6 hours, thus yielding 151.2 g of powder, which was then dissolved in 604 g of N,N-dimethylacetamide (DMAc), resulting in a 20 wt% solution (viscosity: 55 poise).
Thereafter, the same subsequent process as in Example 1 was conducted, thereby preparing a polyimide film.

<Comparative Example 1>

A polyimide film was prepared in the same manner as in Example 3, with the exception that final thermal treatment was not conducted after removal from the frame.

<Comparative Example 2>

A polyimide film was prepared in the same manner as in Example 8, with the exception that final thermal treatment was not conducted after removal from the frame.

(1) Transmittance and 50% Cut-off Wavelength

The transmittance at 380~780 nm and at 550 nm and 50% cut-off wavelength of the polyimide films of the examples were measured using a UV spectrophotometer (Cary100, available from Varian).

(2) Yellowing Index

The yellowing index was measured according to ASTM E313.

(3) Coefficient of Thermal Expansion (CTE), D and I

The CTE was measured at 50~200°C through three temperature variations including a first run, a second run, and a third run according to a TMA method using a TMA (Diamond TMA, available from Perkin Elmer). Specifically, each of the three temperature variations was composed of a temperature increase from 30°C to 230°C and a temperature decrease from 230°C to 30°C.
The measured CTE values were averaged, thus determining an average CTE. Further, I, indicating an increment, was determined by dividing the difference between the maximum CTE, among the measured CTE values, and the average CTE by the average CTE and then converting the obtained value into a percentage, as represented by Equation 2 below, and D, indicating a decrement, was determined by dividing the difference between the minimum CTE, among the measured CTE values, and the average CTE by the average CTE and then converting the obtained value into a percentage, as represented by Equation 1 below.

```
Equation 1

D = (minimum CTE - average CTE) / average CTE × 100


   Equation 2

   I = (maximum CTE - average CTE) / average CTE × 100
```

TABLE 1

| | | Composition | Molar Ratio | Thick. (μm) | Transmit. | | 50% Cut-off Wave. (nm) | Yellow. |
|---|---|---|---|---|---|---|---|---|
| | | | | | 380 nm -780 nm | 550 nm | | |
| Ex. | 1 | 6FDA/BPDA/TFDB | 9:1:10 | 100 | 87.07 | 90.4 | 393 | 1.65 |
| | 2 | 6FDA/BPDA/TFDB | 8:2:10 | 100 | 85.79 | 89.8 | 398 | 1.91 |
| | 3 | 6FDA/BPDA/TFDB | 7:3:10 | 100 | 85.2 | 89.6 | 400 | 2.2 |
| | 4 | 6FDA/BPDA/TFDB | 6:4:10 | 100 | 84.6 | 88.9 | 408 | 3.02 |
| | 5 | 6FDA/BPDA/TFDB | 5:5:10 | 100 | 83.15 | 88.2 | 412 | 5.24 |
| | 6 | 6FDA/PMDA/TFDB | 9:1:10 | 100 | 85.7 | 90.08 | 400 | 2.87 |
| | 7 | 6FDA/PMDA/TFDB | 8:2:10 | 100 | 83.62 | 89.75 | 409 | 3.11 |
| | 8 | 6FDA/PMDA/TFDB | 7:3:10 | 100 | 82.5 | 89.4 | 411 | 6.52 |
| | 9 | PMDA/ODA/p-PDA | 10:7.5:2.5 | 25 | 53.4 | 65.28 | 519 | 90.4 |
| | 10 | PMDA/ODA | 10:10 | 25 | 56.6 | 73.7 | 514 | 91.7 |
| | 11 | 6FDA/TFDB | 10:10 | 100 | 84.4 | 90.4 | 385 | 1.17 |
| | 12 | 6FDA/TFDB/133APB | 10:7:3 | 100 | 85.1 | 89.7 | 403 | 3.51 |
| | 13 | 6FDA/6HBDA/TFDB | 7:3:10 | 100 | 84.4 | 88.1 | 398 | 4.04 |
| C. Ex. | 1 | 6FDA/BPDA/TFDB | 7:3:10 | 100 | 85.4 | 90.03 | 400 | 2.13 |
| | 2 | 6FDA/PMDA/TFDB | 7:3:10 | 100 | 82.7 | 89.55 | 410 | 5.63 |

TABLE 2

| | | Composition | Molar Ratio | Thick. (μm) | CTE (ppm/°C) | | | D(%) | I (%) |
|---|---|---|---|---|---|---|---|---|---|
| | | | | | First | Second | Third | | |
| Ex. | 1 | 6FDA/BPDA/TFDB | 9:1:10 | 100 | 42.3 | 46.53 | 49.3 | -8.13 | 7.07 |
| | 2 | 6FDA/BPDA/TFDB | 8:2:10 | 100 | 37.06 | 40.4 | 42.5 | -7.3 | 6.3 |
| | 3 | 6FDA/BPDA/TFDB | 7:3:10 | 100 | 32.1 | 34.6 | 36.1 | -6.3 | 5.4 |
| | 4 | 6FDA/BPDA/TFDB | 6:4:10 | 100 | 28.35 | 30.3 | 31.8 | -6 | 5.5 |
| | 5 | 6FDA/BPDA/TFDB | 5:5:10 | 100 | 25.3 | 26.9 | 28.3 | -5.7 | 5.5 |
| | 6 | 6FDA/PMDA/TFDB | 9:1:10 | 100 | 41.7 | 45.87 | 48.2 | -7.9 | 6.5 |
| | 7 | 6FDA/PMDA/TFDB | 8:2:10 | 100 | 33.4 | 36.07 | 38.5 | -7.2 | 6.9 |

10

(continued)

|  |  | Composition | Molar Ratio | Thick. (μm) | CTE (ppm/°C) | | | D(%) | I (%) |
|---|---|---|---|---|---|---|---|---|---|
|  |  |  |  |  | First | Second | Third |  |  |
|  | 8 | 6FDA/PMDA/TFDB | 7:3:10 | 100 | 30.2 | 32.01 | 33.8 | -5.6 | 5.6 |
|  | 9 | FMDA/ODA/p-PDA | 10:7.5:2.5 | 25 | 14.57 | 14.9 | 15.2 | -2.1 | 2 |
|  | 10 | PMDA/ODA | 10:10 | 25 | 26.2 | 27.1 | 28.1 | -3.5 | 3.3 |
|  | 11 | 6FDA/TFDB | 10:10 | 100 | 47.1 | 54.05 | 58.2 | -11.3 | 9.6 |
|  | 12 | 6FDA/TFDB/133APB | 10:7:3 | 100 | 55.69 | 69.38 | 75.63 | -16.7 | 13 |
|  | 13 | 6FDA/6HBDA/TFDB | 7:3:10 | 100 | 57.3 | 70.8 | 78.32 | -16.7 | 13.8 |
| C. Ex. | 1 | 6FDA/BPDA/TFDB | 7:3:10 | 100 | 19.22 | 38.3 | 42.62 | -42.4 | 27.7 |
|  | 2 | 6FDA/PMDA/TFDB | 7:3:10 | 100 | 20.34 | 34.6 | 40.4 | -36 | 27.1 |

As is apparent from the results of the evaluation of the properties, in the examples of the present invention, D and I, derived using Equations 1 and 2, were in the range of -20 ≤ D ≤ 0 and 0 ≤ I ≤ 20, respectively.

In Examples 12 and 13, using the monomers having a flexible group, the CTE was higher and the hysteresis range was wider than those of the other examples. This was because the free volume was increased and the regularity of the array was decreased, due to the flexible group, compared to the other examples, and therefore the degree of change became greater under heat and a predetermined tension.

On the other hand, as the amount of rigid monomer containing no flexible group was increased, it could be seen that the CTE was lowered and the hysteresis range was narrowed. In this case, however, transmittance was reduced and the yellowing index was slightly increased. This was because large amounts of intramolecular and intermolecular charge transfer complexes were produced from the rigid monomers.

Compared to Examples 3 and 8, in Comparative Examples 1 and 2, the same composition was used but final thermal treatment was not conducted, and thus, the optical properties or yellowing index were not greatly different, whereas the CTE hysteresis range was remarkably widened. This was considered to be because final thermal treatment was not conducted and thus the thermal expansion was distorted, attributable to the residual stress in the film.

Hence, the polyimide film prepared in the comparative examples exhibits a very large change in terms of the CTE and is difficult to apply to fields requiring high thermal dimensional stability.

**Claims**

1. A polyimide film, wherein when 2n+1 (in which n is an integer from 1 to 3) measurements of a coefficient of thermal expansion thereof are conducted at 100~500°C using a TMA method, D (%), calculated from Equation 1 below, is -20 ≤ D ≤ 0, and I (%), calculated from Equation 2 below, is 0 ≤ I ≤ 20;
   wherein the polyimide film is obtained by polymerizing diamine and dianhydride, thus preparing a polyamic acid solution, subjecting the polyamic acid solution to a film forming process, thus obtaining a polyimide film, and then thermally treating the polyimide film at 100~500°C for a period of time ranging from 1 min to 3 hours;
   the dianhydride component comprising one or a mixture of two or more selected from the group consisting of 2,2-bis(3,4-dicarboxyphenyl)hexafluoropropane dianhydride (6FDA), 4-(2,5-dioxotetrahydrofuran-3-yl)-1,2,3,4-tetrahydronaphthalene-1,2-dicarboxylic dianhydride (TDA), pyromellitic dianhydride (PMDA, 1,2,4,5-benzene tetracarboxylic dianhydride), benzophenone tetracarboxylic dianhydride (BTDA), biphenyl tetracarboxylic dianhydride (BPDA), oxydiphthalic dianhydride (ODPA), bis-carboxyphenyl dimethylsilane dianhydride (SiDA), bis-dicarboxyphenoxy diphenylsulfide dianhydride (BDSDA), sulfonyl diphthalic anhydride (SO$_2$DPA), cyclobutane tetracarboxylic dianhydride (CBDA), and isopropylidene diphenoxy bis-phthalic anhydride (6HBDA);
   the diamine component comprising one or a mixture of two or more selected from the group consisting of oxydianiline (ODA), p-phenylene diamine (pPDA), m-phenylene diamine (mPDA), p-methylene diamine (pMDA), m-methylene diamine (mMDA), bis-aminophenoxy benzene (133APB, 134APB), bis-aminophenoxy phenyl hexafluoropropane (4BDAF), bis-aminophenyl hexafluoropropane (33-6F, 44-6F), bis-aminophenyl sulfone (4DDS, 3DDS), bis-trifluoromethyl benzidine (TFDB), cyclohexane diamine (13CHD, 14CHD), bis-aminophenoxy phenyl propane (6HMDA), bis-aminohydroxy phenyl hexafluoropropane (DBOH), and bis-aminophenoxy diphenyl sulfone (DBSDA):

Equation 1

D = (minimum coefficient of thermal expansion – average coefficient of thermal expansion) / average coefficient of thermal expansion × 100

Equation 2

I = (maximum coefficient of thermal expansion – average coefficient of thermal expansion) / average coefficient of thermal expansion × 100.

2. The polyimide film according to claim 1, wherein the D (%) calculated from Equation 1 is -15 ≤ D ≤ 0, and I (%) calculated from Equation 2 is 0 ≤ I ≤ 15.

3. The polyimide film according to claim 1, wherein the coefficient of thermal expansion at 50~200°C is 50 ppm/°C or less.

4. A substrate for a display, comprising the polyimide film of any one of claims 1 to 3.


**Patentansprüche**

1. Polyimidfilm, worin, wenn 2n+1 (worin n eine ganze Zahl von 1 bis 3 ist)-Messungen eines thermischen Ausdehnungskoeffizienten hiervon bei 50-220°C unter Verwendung einer TMA-Methode durchgeführt werden, D (%), berechnet aus nachstehender Gleichung 1, -20 ≤ D ≤ 0 und I (%), berechnet aus nachstehender Gleichung 2, 0 ≤ I ≤ 20 sind;

wobei der Polyimidfilm erhalten wird durch Polymerisieren von Diamin und Dianhydrid, um so eine Polyamidsäurelösung herzustellen, Unterziehen der Polyamidsäurelösung einem filmbildenden Verfahren, um so einen Polyimidfilm zu erhalten, und danach thermisches Behandeln des Polyimidfilms bei 100-500°C während eines Zeitraums im Bereich von 1 Min. bis 3 Stunden;
die Dianhydridkomponente eine oder eine Mischung aus zwei oder mehreren umfasst, gewählt aus der Gruppe, bestehend aus 2,2-Bis(3,4-dicarboxyphenyl)hexafluoropropandianhydrid (6FDA), 4-(2,5-Dioxotetrahydrofuran-3-yl)-1,2,3,4-tetrahydronaphthalin-1,2-dicarbonsäuredianhydrid (TDA), Pyromellithsäuredianhydrid (PMDA, 1,2,4,5-Benzoltetracarbonsäuredianhydrid), Benzophenontetracarbonsäuredianhydrid (BTDA), Biphenyltetracarbonsäuredianhydrid (BPDA), Oxydiphthalsäuredianhydrid (ODPA), Bis-carboxyphenyldimethylsilandianhydrid (SiDA), Bisdicarboxyphenoxydiphenylsulfiddianhydrid (BDSDA), Sulfonyldiphthalsäureanhydrid (SO$_2$DPA), Cyclobutantetracarbonsäuredianhydrid (CBDA) und Isopropylidendiphenoxybis-phthalsäureanhydrid (6HBDA);
die Diaminkomponente eine oder eine Mischung aus zwei oder mehreren umfasst, gewählt aus der Gruppe, bestehend aus Oxydianilin (ODA), p-Phenylendiamin (pPDA), m-Phenylendiamin (mPDA), p-Methylendiamin (pMDA), m-Methylendiamin (mMDA), Bis-Aminophenoxybenzol (133APB, 134APB), Bis-Aminophenoxyphenylhexafluoropropan (4BDAF), Bis-Aminophenylhexafluoropropan (33-6F, 44-6F), Bis-Aminophenylsulfon (4DDS, 3DDS), Bis-Trifluoromethylbenzidin (TFDB), Cyclohexandiamin (13CHD, 14CHD), Bis-Aminophenoxyphenylpropan (6HMDA), Bis-Aminohydroxyphenylhexafluoropropan (DBOH) und Bis-Aminophenoxydiphenylsulfon (DBSDA):

Gleichung 1

D = (minimaler thermischer Ausdehnungskoeffizient – durchschnittlicher thermischer Ausdehnungskoeffizient) / durchschnittlicher thermischer Ausdehnungskoeffizient x 100

Gleichung 2

I = (maximaler thermischer Ausdehnungskoeffizient – durchschnittlicher thermischer Ausdehnungskoeffizient) / durchschnittlicher thermischer Ausdehnungskoeffizient x 100.

2. Polyimidfilm nach Anspruch 1, wobei D (%), berechnet aus Gleichung 1, $-15 \leq D \leq 0$, und I (%), berechnet aus Gleichung 2, $0 \leq I \leq 15$ sind.

3. Polyimidfilm nach Anspruch 1, wobei der thermische Ausdehnungskoeffizient bei 50-200°C 50 ppm/°C oder weniger ist.

4. Substrat für eine Anzeige, umfassend den Polyimidfilm nach mindestens einem der Ansprüche 1 bis 3.

**Revendications**

1. Pellicule polyimide, dans laquelle, quand 2n+1 (où n est un nombre entier de 1 à 3) mesures d'un coefficient de dilatation thermique de celle-ci sont effectuées à 50~200°C en utilisant un procédé d'analyse thermomécanique (TMA), D (%), calculé selon l'équation 1 en dessous, est $-20 \leq D \leq 0$, et I (%), calculé selon l'équation 2 en dessous, est $0 \leq I \leq 20$ ;
la pellicule polyimide étant obtenue en polymérisant de la diamine et du dianhydride, ainsi formant une solution d'acide polyamique, soumettant la solution d'acide polyamique à un procédé de formation de pellicule, ainsi obtenant une pellicule polyimide, et ensuite traitant thermiquement la pellicule polyimide à 100~500°C pendant une période temporaire allant de 1 min. à 3 heures;
le composant de dianhydride comprenant un ou un mélange de deux ou plusieurs choisi parmi le groupe constitué par le 2,2-bis(3,4-dicarboxyphényl)-hexafluoropropane-dianhydride (6FDA), le dianhydride 4-(2,5-dioxotetrahydrofuran-3-yl)-1,2,3,4-tetrahydronaphthalène-1,2-dicarboxylique (TDA), le dianhydride pyromellitique (PMDA, dianhydride 1,2,4,5-benzène-tetracarboxylique), le dianhydride benzophénone-tetracarboxylique (BTDA), le dianhydride biphényl-tetracarboxylique (BPDA), le dianhydride oxydiphthalique (OD-PA), le dianhydride de bis-carboxyphényl-diméthylsilane (SiDA), le dianhydride de bis-dicarboxyphénoxy-diphénylsulfide (BDSDA), l'anhydride de sulfonyle diphtalique ($SO_2DPA$) le dianhydride cyclobutane-tetracarboxylique (CBDA), et l'anhydride isopropylidène-diphénoxy-bis-phtalique (6HBDA);
le composant de diamine comprenant un ou une ou un mélange de deux ou plusieurs choisi parmi le groupe constitué par l'oxydianiline (ODA), la p-phénylène diamine (pPDA), la m-phénylène diamine (mPDA), la p-méthylène diamine (pMDA), la m-méthylène diamine (mMDA), le bis-aminophénoxybenzène (133APB, 134APB), le bis-aminophénoxy-phényl-hexafluoropropane (4BDAF), le bis-amino-phényl-hexafluoropropane (33-6F, 44-6F), le bis-aminophényl-sulfone (4DDS, 3DDS), la bis-trifluorométhyl-benzidine (TFDB), la cyclohexane diamine (13CHD, 14CHD), le bis-aminophénoxy-phényl-propane (6HMDA), le bis-aminohydroxy-phényl-hexafluoropropane (DBOH), et le bis-aminophénoxy-diphényl-sulfone (DBSDA):

équation 1

D = (coefficient minimal de dilatation thermique – coefficient moyen de dilatation thermique) / coefficient moyen de dilatation thermique × 100

équation 2

I = (coefficient maximal de dilatation thermique – coefficient moyen de dilatation thermique) / coefficient moyen de dilatation thermique × 100.

2. La pellicule polyimide selon la revendication 1, dans laquelle le D (%) calculé selon l'équation 1 est -15 ≤ D ≤ 0, et I (%) calculé selon l'équation 2 est 0 ≤ I ≤ 15.

3. La pellicule polyimide selon la revendication 1, dans laquelle le coefficient de dilatation thermique à 50~200°C est 50 ppm/°C ou moins.

4. Support pour écran comprenant la pellicule polyimide selon l'une quelconque des revendications 1 à 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150238896 A
- WO 2007083909 A
- WO 2007066948 A
- EP 1749850 A
- US 5649045 A